## Europäisches Patentamt

## European Patent Office

## Office européen des brevets

(11) Veröffentlichungsnummer: **0 058 710**
**B1**

(12) **EUROPÄISCHE PATENTSCHRIFT**

(19)

(45) Veröffentlichungstag der Patentschrift:
09.04.86

(21) Anmeldenummer: 81902478.7

(22) Anmeldetag: 26.08.81

(86) Internationale Anmeldenummer:
PCT/DE 81/00130

(87) Internationale Veröffentlichungsnummer:
WO 82/00891 (18.03.82 Gazette 82/8)

(51) Int. Cl.⁴: **G 01 N 21/59, G 01 N 25/72**

(54) **VERFAHREN UND VORRICHTUNG ZUR KONTAKTLOSEN PHOTO-THERMISCHEN UNTERSUCHUNG VON OBERFLÄCHENNAHEN UND INNEREN STRUKTUREN EINES FESTEN KÖRPERS.**

(30) Priorität: 01.09.80 DE 3034944

(43) Veröffentlichungstag der Anmeldung:
01.09.82 Patentblatt 82/35

(45) Bekanntmachung des Hinweises auf die Patenterteilung:
09.04.86 Patentblatt 86/15

(84) Benannte Vertragsstaaten:
AT CH DE FR GB LI NL

(56) Entgegenhaltungen:
WO - A - 80/01005
US - A - 3 805 073
US - A - 3 808 439
US - A - 3 842 277
US - A - 4 041 313

IBM Technical Disclosure Bulletin, Vol. 19, Nr. 1, June 1976, (New York, US), K. Mueller u.a. "Emission Spectrophotometer", see pages 303-304
Solid State Technology, Vol. 18, Nr. 8, August 1975, (New York, US) H. Matare, "Wafer testing", pages 58-62

(73) Patentinhaber: **FA. CARL ZEISS,**
Carl-Zeiss-Strasse 4-54, D-7082 Oberkochen (DE)
Patentinhaber: **FA. CARL ZEISS; CARL ZEISS-STIFTUNG, Carl-Zeiss-Strasse 4-54, D-7082 Oberkochen (DE)**

(72) Erfinder: **Busse, Gerhard, Zugspitzstrasse 27, D-8029 Sauerlach (DE)**

## Beschreibung

Die vorliegende Erfindung betrifft ein Verfahren und eine Vorrichtung zur kontaktlosen photothermischen Untersuchung von oberflächennahen und inneren Strukturen eines festen Körpers.

Zum Zwecke der Fertigungsüberwachung und der Werkstückprüfung ist häufig die Messung von Materialstärken und die Feststellung der oberflächlichen oder inneren Strukturen z.B. von inneren Bohrungen oder Lunkern, an Festkörpern erforderlich.

Zur Bestimmung von Oberflächenstrukturen und für die Kontrolle von Körpern aus durchsichtigem Material bedient man sich optischer Mess- und Prüfverfahren. Die Untersuchung von Strukturen unter der Körperoberfläche und auch berührungsfreie Dicken-Messungen erfordern einen größeren Aufwand, wenn es sich bei den Prüflingen um Körper aus lichtundurchlässigem Material, z.B. aus Metall oder aus einem Halbleiter handelt. Für solche Untersuchungen wurden bisher meist Ultraschall- oder Röntgenverfahren angewandt. Die Ultraschallverfahren arbeiten nicht berührungsfrei und sind deshalb nicht zur unmittelbaren und kontinuierlichen Untersuchung bewegter Teile wie z.B. zur Untersuchung von Walzblechen geeignet. Röntgenverfahren erfordern zwar keinen Materialkontakt, sie können aber für die Erkennung von Grenzflächenstrukturen nur bedingt angewandt werden.

Es sind auch schon Vorrichtungen angegeben worden, die nach dem sogenannten opto-(bzw. photo-)akustischen Verfahren arbeiten und die zum Erkennen von Materialstrukturen auch unter der Materialoberfläche dienen. Beim optoakustischen Verfahren wird an der Oberfläche des zu untersuchenden Festkörpers mit einem intensitätsmodulierten Lichtstrahl aufgrund der durch Absorption bedingten periodischen Wärmezufuhr eine örtliche Temperaturmodulation erzeugt, die bezüglich Amplitude und Phasenlage abhängig ist von der Wärmeabfuhr im Inneren des Festkörpers.

Wird der Festkörper in einer luftdicht abgeschlossenen Kammer angeordnet, so läßt sich seine Temperaturmodulation mittels eines in der Kammer angeordneten Mikrofons messen. Da die Temperaturmodulation des Festkörpers mit einer entsprechenden Modulation seiner Ausdehnung verbunden ist, läßt sie sich auch mit einem piezoelektrischen Empfänger messen, der mit dem zu prüfenden Körper fest verbunden ist. Ein nach diesem Prinzip arbeitendes photoakustisches Mikroskop ist aus der WO-A-80/01 005 bekannt. Dieses Mikroskop dient zur Erzeugung eines Bildes des Prüflings, der dazu relativ zum Lichtstrahl verschoben wird.

Bei beiden bekannten Verfahren zur Signalerzeugung auf opto-akustischem Wege lassen sich über die Phase des Meßsignals Strukturen im Inneren des zu prüfenden Körpers abbilden.

Es ist ohne weiteres einzusehen, daß bei den bekannten Verfahren zur Erzeugung eines optoakustischen Meßsignals die eigentliche Messung oder Abbildung auf einen sehr kleinen, durch die thermische Eindringtiefe des Lichtstrahls begrenzten Tiefenbereich beschränkt ist. Die thermische Eindringtiefe beträgt beispielsweise bei einem Prüfling aus Aluminium und einer Modulationfrequenz des Lichtstrahles von 20 Hz nur 0,12 cm. Außerdem erfordern diese Verfahren einen physikalischen Kontakt des Empfängers mit der Probe und sind deshalb auf die Messung kleiner Körper beschränkt.

Ein anderes Meßverfahren zur berührungsfreien Struktur-Untersuchung von Körpern ist aus US-A-3 805 073 bekannt. Dort wird eine Oberfläche des zu untersuchenden Körpers mittels eines nicht modulierten fokussierten Infrarot-Strahles rasterförmig abgetastet. Die dabei entstehende Erwärmung des jeweiligen Auftreffpunktes breitet sich durch Wärmeleitung aus und erreicht schließlich die gegenüberliegende Seite des Körpers. Die von Punkten auf dieser Seite des Körpers erreichte Temperatur hängt von der Geschwindigkeit ab mit der die Wärme durch den Körper geleitet wird und wird örtlich von inneren Strukturen des Körpers beeinflußt. Die Temperatur an zwei Punkten dieser Körperoberfläche wird laufend gemessen, wobei diese Meßpunkte dem Anregungsstrahl nachgeführt werden, jedoch stets hinter dessen Auftreffstelle liegen. Die von den beiden Meßpunkten kommenden Temperatur-Signale werden dann zu einem stereoskopischen Bild verarbeitet, das ein Wärmebild des thermischen Verhaltens des Körpers darstellt.

In US-A-3 842 277 ist ein ähnliches Verfahren beschrieben, bei dem jedoch die Temperatur an zwei seitlich und hinter der Auftreffstelle des Anregungsstrahles auf derselben Körperoberfläche liegenden Punkten zur Erzeugung des stereoskopischen Wärmebildes verwendet wird.

Das diesen beiden Dokumenten zugrundeliegende Meßprinzip arbeitet nicht sehr schnell und ist nicht geeignet auch dickere Körper verläßlich zu untersuchen.

Der vorliegenden Erfindung liegt nun die Aufgabe zugrunde ein photothermisches Verfahren und eine Vorrichtung zu schaffen, das bzw. die eine genaue Struktur-Untersuchung in Fläche und Tiefe auch an festen Körpern mit größeren Abmessungen und an bewegten Teilen ermöglicht, ohne daß der erfaßbare Tiefenbereich durch die thermische Eindringtiefe des modulierten Anregungsstrahles beschränkt ist.

Diese Aufgabe wird, ausgehend von dem bekannten Verfahren, bei dem der zu untersuchende Körper mit einem gebündelten, modulierten Anregungsstrahl abgetastet und die Wirkung der dabei örtlich induzierte Körpertemperatur auf der dem auftreffenden Anregungsstrahl abgewandten Seite des Körpers als vom Körper ausgehende Infrarotstrahlung gemessen wird, durch ein Verfahren nach dem Kennzeichen des Anspruchs 1 gelöst.

Bei diesem Verfahren wird also nur die transmittierte Wärmewelle nachgewiesen. Das von dieser erzeugte Infrarotsignal liegt als Wechselsignal vor, das in einfacher Weise elektronisch verarbeitet werden kann.

Der Anregungsstrahl kann aus elektromagnetischer Strahlung, beispielsweise Licht, aus Elektronen oder auch aus Ionen bestehen. In jedem Fall wird eine elektromagnetische oder Korpuskular-Strahlung verwendet, die von dem zu prüfenden Körper absorbiert wird. Der zur Messung der vom Körper transmittierten Wärmewelle dienende Infrarot-Detektor ist so ausgewählt, daß er im Maximum der Planck-Funktion arbeitet. Diese liegt beispielsweise bei einem 300°K warmen Körper bei etwa 9 μm. Diese Wellenlänge wird kleiner je wärmer die Probe ist.

Die Ausdehnung des zu prüfenden Körpers in Richtung des Anregungsstrahles, d.h. die Materialdicke ist bei dem Verfahren nach der Erfindung nicht durch die thermische Eindringtiefe des Anregungsstrahles begrenzt. Sie kann mehrere, beispielsweise 7 oder 8 mm betragen und zwar abhängig von der Leistung der Anregungsstrahl-Quelle, der Empfindlichkeit des Infrarotdtektors, dem Material der Probe und der geforderten Signalempfindlichkeit.

Für die praktischen Anwendungen des Verfahrens, insbesondere die Prüfung opaker Materialien wie Metalle und Halbleiter ergibt sich ein linearer Zusammenhang zwischen dem Phasenwinkel des Meßsignales und der Materialdicke sowie ein Exponentialgesetz für die Abhängigkeit der Amplitude von der Materialdicke.

Durch Ausnutzung der verschiedenartigen Abhängigkeiten, denen Phase und Amplitude des Meßsignals unterliegen, ist es möglich, zwischen optischen und thermischen Eigenschaften des zu prüfenden Körpers zu unterscheiden. Da die Phasenlage als Signal aus einer Laufzeitverzögerung entsteht, ist diese Messung neben ihrer Eignung zur Bestimmung der Dicke auch empfindlich gegen Grenzflächen, so daß z.B. Löcher in Metallteilen auch dann noch zu erkennen sind, wenn diese nachträglich mit dem Material der Umgebung ausgefüllt wurden.

Die Amplitude des Meßsignals wird vorzugsweise dazu verwendet oberflächennahe Strukturen des Körpers zu untersuchen. Unter Ausnützung des Parallaxeneffektes der vom Körper ausgehenden Wärmewellen kann auch eine Tiefenlokalisierung von Strukturen ermöglicht werden. Der Parallaxeneffekt kann sowohl bei der Amplituden- als auch bei der Phasenwinkel-Messung ausgenutzt werden.

Besonders vorteilhaft ist es, den Anregungsstrahl während seiner Abtastbewegung über den zu untersuchenden Körper durch eine überlagerte oszillierende Bewegung örtlich zu modulieren. Diese Modulierung kann linear, senkrecht oder parallel zur Abtastrichtung des Strahls erfolgen; es ist jedoch auch möglich, den Anregungsstrahl auf einer Ellipse oder einem Kreis zu führen. Bei dieser Art der Modulation werden nur Signaländerungen entlang der oszillierenden Bewegungsrichtung registriert. Man erhält die dazu parallele Komponente des Gradienten des Signals. Bei einer Kreismodulation des Strahls ist die gefundene Wechselkomponente des Signals proportional zum Betrag des Gradienten.

Durch die beschriebene Ortsmodulation lassen sich damit die Abbildungskontraste von Strukturen vergrößern. Durch Wahl der Oszillationsrichtung lassen sich senkrecht zu dieser Richtung verlaufende Strukturen besonders deutlich hervorheben.

Die Aufgabe wird ferner durch die Vorrichtung gemäß Auspruch 6 gelöst.

Die Ausgestaltung der Vorrichtung zur Durchführung des Verfahrens nach der Erfindung ergibt sich aus den abhängigen Ansprüchen 7 - 10.

Die Erfindung wird im folgenden anhand der Figuren 1 - 5 der beigefügten Zeichnungen näher erläutert. Im einzelnen zeigen:

Fig. 1 ein Ausführungsbeispiel einer Vorrichtung zur Dickenmessung nach dem erfindungsgemäßen Verfahren;

Fig. 2 Kurven, welche die Abhängigkeit von Amplitude und Phase des Meßsignals von der Dicke des zu messenden Körpers zeigen;

Fig. 3 mit der Vorrichtung nach Fig. 1 ermittelte Messkurven, die den Verlauf des Phasenwinkels und der Amplitude des transmittierten Wärmesignals für den im Schnitt dargestellten Körper zeigen;

Fig. 4 Ein Ausführungsbeispiel einer Vorrichtung zur Erzeugung eines mikroskopischen Bildes eines Körpers;

Fig. 5 eine vergrößerte Darstellung von zwei Abtastbahnen des Anregungsstrahles bei Ortsmodulation desselben.

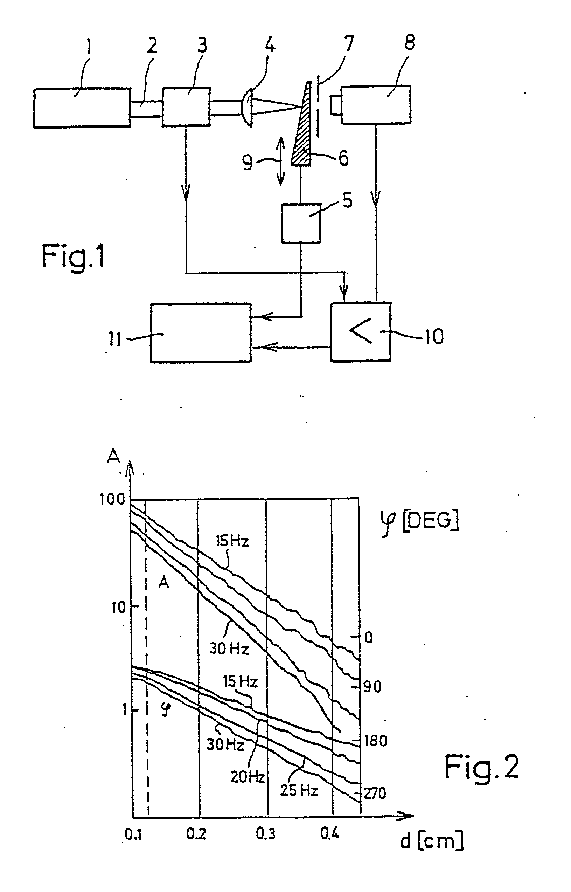

Bei der Vorrichtung nach Fig. 1 wird der von einem Laser 1 erzeugte Abtaststrahl 2 durch einen Chopper 3 intensitätsmoduliert und durch eine schematisch dargestellte Optik 4 auf die Oberfläche eines Prüflings 6 abgebildet. Dieser ist mittels einer Transporteinrichtung 5 seitlich im Sinne des Pfeiles 9 verschiebbar. Bei dem hier dargestellten Prüfling 6 handelt es sich beispielsweise um einen für Eichzwecke bei Dickenmessungen verwendeten Aluminiumkeil. Hinter dem Prüfling 6 ist eine Bildbegrenzungsblende 7 angeordnet. Die durch diese tretende Infrarotstrahlung fällt auf einen Infrarotdetektor 8, dessen Signal einem Lock-in-Verstärker 10 zugeführt wird. Vom Verstärker 10 gelangt das Meßsignal zu einer Anzeigeeinheit 11, der von der Transporteinrichtung 5 ein dem Verschiebeweg des Prüflings 6 proportionales Signal zugeleitet wird. Die Anzeigeeinheit 11 erzeugt damit eine Kurve, welche die Abhängigkeit des Meßsignals vom Ort des Prüflings 6 zeigt.

Im Ausführungsbeispiel der Fig. 1 ist als Quelle für den Anregungsstrahl 2 ein Laser 1 dargestellt. Dieser kann beispielsweise als Argon-Ionen-Laser ausgebildet sein, der einen Strahl 2 erzeugt, welcher vor der Fokussierung eine Leistung von 50 mW enthält. Durch Fokussierung mittels des optischen Elementes 4 wird im Auftreffpunkt des Strahles auf den Prüfling 6 eine Leistungsdichte von etwa $10^6$ bis $10^8$ W/cm$^2$ erreicht. Diese Leistung reicht aus, um beispielsweise an einem Prüfling 6 aus Aluminium Messungen durchzuführen, die in eine Tiefe bis zu 7 oder 8 mm reichen.

Mit der Vorrichtung nach Fig. 1 lassen sich die in Fig. 2 dargestellten Eichkurven erhalten, welche die Abhängigkeit der Amplitude A und des Phasenwinkels γ von der Dicke d des Körpers 6 bei verschiedenen Modulationsfrequenzen des Strahles 2 zeigt.

Die Vorrichtung nach Fig. 1 läßt sich so ausbilden, daß sowohl die Amplitude A als auch der Phasenwinkel γ der durch den Prüfling 6 hindurchtretenden Wärmestrahlung gemessen werden kann. Aus diesen Messungen läßt sich anhand der Eichkurven der Fig. 2 die Dicke des Prüflings 6 bestimmen. Dieser kann aus einem opaken Material, beispielsweise aus Metall oder einem Halbleiter bestehen. Die Probe 6 kann auch eine biologische Probe sein.

Verwendet man in der Vorrichtung nach Fig. 1 anstelle des Prüflings 6 einen Körper bekannter Dicke, so läßt sich mit Hilfe des vom Empfänger 8 erzeugten Signales die Leistung des Lasers 1 in einfacher und eindeutiger Weise bestimmen.

Als Infrarotdetektor 8 können praktisch alle bekannten Detekoren Verwendung finden. Gemessen wird im Maximum der Planck-Funktion, das bei Raumtemperatur des Prüflings 6 etwa bei 9 μm liegt. Als mögliche Infrarotdetektoren können Verwendung finden entweder Golayzellen, Bolometer oder auch Hg-Cd-Te-Detektoren.

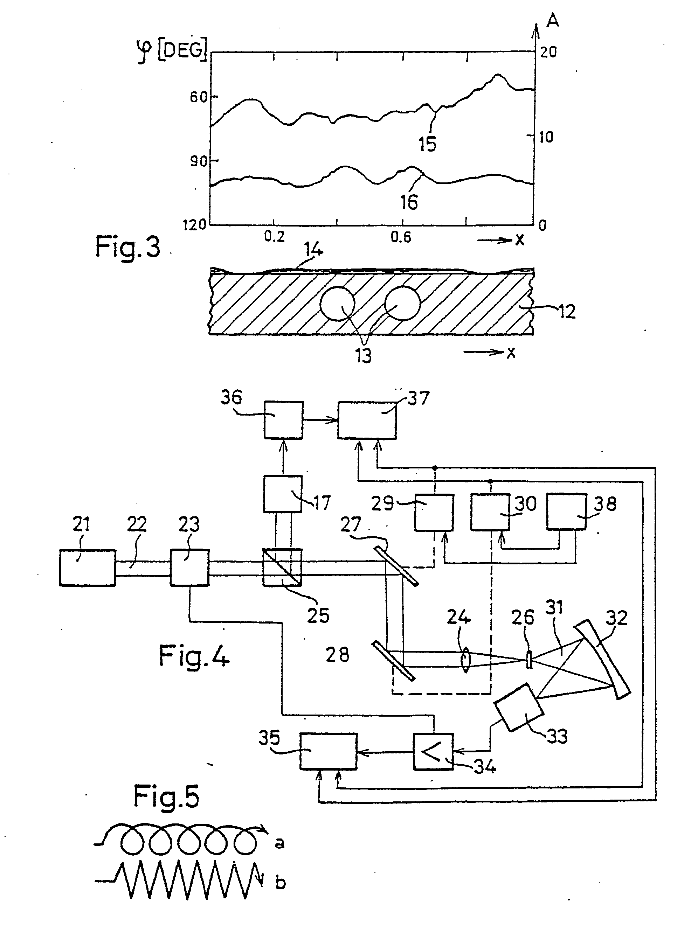

Im unteren Teil der Figur 3 ist ein Prüfling 12 dargestellt, welcher beispielsweise aus Metall besteht und in seinem Inneren zwei parallele Kanäle 13 enthält. Seine dem Anregungsstrahl 2 zugewandte Oberfläche ist stellenweise mit einer Graphitschicht 14 bedeckt. Wird dieser Körper anstelle des in Fig. 1 dargestellten keilförmigen Prüflings 6 durch den Abtaststrahl 2 bewegt, so erhält man die im oberen Teil der Fig. 3 dargestellte Kurve 15, wenn der Empfängerteil so ausgebildete ist, daß die Anzeigeeinheit 11 die Amplitude des Meßsignals zeigt. Ist die Vorrichtung so ausgebildet, daß die Anzeigeeinheit 11 den Phasenwinkel γ zeigt, so ergibt sich die Kurve 16.

Die Kurve 15 zeigt, daß die Amplitude im wesentlichen auf die Oberflächenstrukturen des Prüflings 12 anspricht, während die Strukturen im Inneren des Prüflings fast nur durch den Phasenwinkel γ in Kurve 16 dargestellt werden. Es empfiehlt sich deshalb zur Messung von inneren Strukturen in einem Körper den Phasenwinkel γ heranzuziehen.

Bei dem in Fig. 4 dargestellten Ausführungsbeispiel wird der, von einem Laser 21 erzeugte Strahl 22 mittels eines Choppers 23 intensitätsmoduliert und gelangt über die Spiegel 27 und 28 zu einer schematisch dargestellten Optik 24, welche den Strahl 22 auf die Oberfläche des ortsfest angeordneten Prüflings 26 fokussiert. Die Spiegel 27 und 28 werden über Ablenkeinheiten 29 und 30 so bewegt, daß der Anregungsstrahl 22 einen vorbestimmten Oberflächenbereich des Prüflings 26 meanderförmig abtastet.

Im Beleuchtungsstrahlengang ist ein Strahlenteiler 25 vorgesehen, welcher das von der Oberfläche des Prüflings 26 reflektierte Licht einer Beobachtungseinheit 17 zuführt. Diese kann beispielsweise als Fernrohr ausgebildet sein, so daß ein Beobachter laufend die Auftreffstelle des Anregungsstrahles 22 auf dem Werkstück 26 beobachten kann.

Die von der durch den Prüfling 26 transmittierten Wärmewelle ausgelöste thermische Infrarotabstrahlung 31 wird über einen Hohlspiegel 32 auf einen Empfänger 33 fokussiert. Es können hier wieder praktisch alle bekannten Infrarotdetekoren Verwendung finden. Das vom Empfänger 33 erzeugte Signal wird einem Lock-in-Verstärker 34 zugeführt, welcher das demodulierte Signal einer Anzeigeeinheit 35 zuführt. Dieser werden von den Einheiten 29 und 30 Signale zugeführt, welche den Auslenkungen der Spiegel 27 und 28 proportional sind. Damit ist es möglich, mittels der Anzeigeeinheit 35 ein mikroskopisches Bild der Probe 26 darzustellen.

Verwendet man zur Darstellung die Amplitude der Infrarotstrahlung 31, so zeigt die Anzeigeeinheit 35 ein Strukturbild der oberflächennahen Bereiche des Prüflings 26. Wird dagegen der Phasenwinkel γ zur Darstellung verwendet, so ergibt sich ein Strukturbild in tieferen Bereichen des Prüflings 26.

Es ist möglich, die Beobachtungseinheit 17 im Beleuchtungsstrahlengang so auszubilden, daß ihr ein Detektor, beispielsweise ein Photomultiplier 36 nachgeschaltet ist. Das von diesem erzeugte Signal wird einer Anzeigeeinheit 37 zugeführt, welche auch die Ablenkspannungen von den Einheiten 29 und 30 zugeführt erhält.

Die Anzeigeeinheit 37 zeigt damit ein optisches Bild der Oberfläche des Prüflings 26, welches beispielsweise zu Orientierungszwecken dem Bild der Anzeigeeinheit 35 überlagert werden kann.

Die in Fig. 4 dargestellte Vorrichtung findet besonders vorteilhafte Anwendung zur Prüfung von integrierten Schaltungen oder entsprechenden Halbleiterstrukturen. Um dabei eine deutlichere Darstellung der Strukturen im Inneren des Prüflings 26 zu erhalten, ist es zweckmäßig nur den Gradienten des Meßsignals darzustellen. Zu diesem Zweck wird über eine Anordnung 38 ein Ablenksignal erzeugt, welches den Ablenkeinheiten 29 und 30 überlagert wird. Mittels dieser überlagerten Ablenkspannung wird der Abtastbewegung des Strahles 22 in einer Koordinatenrichtung beispielsweise eine im wesentlichen senkrecht zur Fortpflanzungsrichtung verlaufende oszillierende Bewegung überlagert, wie dies beispielsweise in Figur 5b dargestellt ist. Erzeugt die Anordnung 38 zwei Ablenksignale, die im wesentlichen sinusförmig sind und eine Phasendifferenz von 90° haben, so wird der Abtastbewegung des Strahles 22 eine kreisförmige Oszillationsbewegung überlagert, so daß sich eine Abtastspur ergibt, wie sie beispielsweise in Fig. 5a dargestellt ist. Es ist auch möglich und in vielen Fällen vorteilhaft, die beiden sinusförmigen Spannungen der Anordnung 38 in ihrer Amplitude verschieden zu machen, so daß sich eine ellipsenförmige Oszillation des Abtaststrahles 2 ergibt.

Messungen mit einer Vorrichtung von der Art der Fig. 5 haben eine Ortsauflösung des Strukturbildes von etwa 2 μm ergeben.

Bei einer Ortsmodulation des Strahles 22 wird normalerweise auf eine Intensitätsmodulation mittels des Choppers 23 verzichtet. Es kann jedoch in gewissen Fällen, beispielsweise zur Gewinnung von Tiefeninformationen vorteilhaft sein beide Modulationen zu kombinieren.

Bei einer Ortsmodulation des Strahles 22 erhält man auf der Anzeigeeinheit 35 ein kontrastiertes Mikroskopbild, das für schnelle Analysen oder auch zur Automatisierung von Strukturerkennungen herangezogen werden kann.

Eine ganz besonders vorteilhafte Anwendung findet das erfindungsgemäße Verfahren in der Ausführung der Vorrichtung nach Fig. 4 zur Prüfung von Schweißnähten an dünnen Blechen auf Lunker und Einschlüsse. Solche Schweißnähte sind beispielsweise bei Herzschrittmachern zu prüfen, bei denen Bleche einer Dicke von 2 - 5/10 mm Verwendung finden. Die Prüfung derartiger Schweißnähte war bisher praktisch nicht möglich, da sowohl eine Untersuchung mit Ultraschall als auch mit Röntgenstrahlen keine verwertbaren Informationen liefert. Solche Informationen werden jedoch mit dem Verfahren nach der vorliegenden Erfindung in verläßlicher Weise erhalten.

Das Verfahren und die Vorrichtung nach der vorliegenden Erfindung erweitern die bisher bekannten berührungsfreien Untersuchungs-Verfahren wesentlich, indem sie erstmals eine Messung und/oder Abbildung auch größerer Bereiche ohne die sonst störende begrenzte Tiefenwirkung ermöglichen.

**Patentansprüche:**

1. Verfahren zur kontaktlosen photothermischen Untersuchung von oberflächennahen und inneren Strukturen eines festen Körpers, bei dem dieser Körper mit einem gebündelten elektromagnetischen Anregungsstrahl abgetastet und die Wirkung der dabei örtlich induzierten Körpertemperatur auf der dem auftreffenden Anregungsstrahl abgewandten Seite des Körpers als vom Körper ausgehende Infrarotstrahlung gemessen wird, dadurch gekennzeichnet, daß der Anregungsstrahl moduliert wird und die durch den Körper transmittierte Wärmewelle als im Takt des Anregungsstrahles modulierte, abgestrahlte Infrarotstrahlung gemessen wird.

2. Verfahren nach Anspruch 1, dadurch gekennzeichnet, daß die Messung im Maximum der Planck-Funktion erfolgt.

3. Verfahren nach Anspruch 1 und 2, dadurch gekennzeichnet, daß der Anregungsstrahl linear oder zirkular ortsmoduliert wird.

4. Verfahren nach Anspruch 1 und 2, dadurch gekennzeichnet, daß als Messgröße für die Dicke oder die Struktur des Körpers der Phasenwinkel der modulierten Infrarotstrahlung verwendet wird.

5. Verfahren nach Anspruch 1 und 2, dadurch gekennzeichnet, daß zur Untersuchung der Oberflächenstruktur des Körpers die Amplitude der modulierten Infrarotstrahlung gemessen und/oder registriert wird.

6. Vorrichtung zur kontaktlosen photothermischen Untersuchung von oberflächennahen und inneren Strukturen eines festen Körpers (6, 26) zur Durchführung des Verfahrens nach den Ansprüchen 1-5, mit einer Anregungsstrahlungsquelle (1, 21) und einem auf der dem Anregungsstrahl (2, 22) abgewandten Seite des Körpers angeordneten Infrarot-Detektor (8, 33), dadurch gekennzeichnet, daß zwischen der Anregungsstrahlungsquelle (1,21) und dem zu untersuchenden Körper (6, 26) ein Modulator (3,23) und daß der Infrarot-Detektor (8,33) räumlich getrennt vom Körper (6,26) angeordnet sind, und daß dem Infrarot-Detektor (8,33) ein über den Modulator (3,23) gesteuerter Lock-in-Verstärker (10,34) zur Demodulation des Meßsignals nachgeordnet ist.

7. Vorrichtung nach Anspruch 6, dadurch gekennzeichnet, daß zur Abtastung des Körpers (26) in einem rechtwinkligen Koordinatensystem zwei bewegliche Spiegel (27,28) zwischen der Quelle (21) des Abtaststrahls (22) und dem Körper (26) vorgesehen sind, und daß der Infrarot-Detektor (33) mit einer Anordnung (34,35) zur Darstellung des thermischen Wechselsignals in Abhängigkeit von den Körperkoordinaten verbunden ist.

8. Vorrichtung nach Anspruch 7, dadurch gekennzeichnet, daß die beiden Spiegel (27,28) mit einer Anordnung (29,30) zur Erzeugung linearer Ablenksignale und zusätzlich mit einer Anordnung (38) zur Erzeugung von Orts-Modulationssignalen verbunden sind.

9. Vorrichtung nach Anspruch 7, dadurch gekennzeichnet, daß zur Überwachung des Auftreffpunktes des Abtaststrahles (22) auf der Oberfläche des Körpers (26) im Abtaststrahl (22) ein Strahlenteiler (25) zur Auslenkung der vom Körper (26) reflektierten Strahlung und im ausgelenkten Strahlengang ein Fernrohr (17) vorgesehen ist.

10. Vorrichtung nach Anspruch 7, dadurch gekennzeichnet, daß zur Beobachtung der Oberflächenstruktur des zu prüfenden Körpers (26) im Abtaststrahlengang (22) ein Strahlenteiler (25) zur Auslenkung der vom Körper (26) reflektierten Strahlung und im ausgelenkten Strahlengang ein Photodetektor (36) angeordnet ist, der mit einem Gerät (37) zur Bilderzeugung in Verbindung steht.

**Claims:**

1. Method for non-contact photo-thermic investigation of superficial and internal structures of a solid body in which this body is scanned by a focused modulated excitation beam and in which the effect of the temperature of the body locally induced during said scanning is measured as the infrared radiation emanuating from the side of the body facing away from the impinging excitation beam, characterized in that the excitation beam is modulated and that the heat wave transmitted through the body is measured as radiated infrared radiation modulated at the same rate as the excitation beam.

2. Method according to claim 1, characterized in that the measurement is effected at the maximum of the Planck-function.

3. Method according to claims 1 and 2, characterized in that the excitation beam is position-modulated linearly or circularly.

4. Method according to claims 1 and 2, characterized in that the phase angle of the modulated infrared radiation is used as measurement value for the thickness or structure of the body.

5. Method according to claims 1 and 2, characterized in that the amplitude of the modulated infrared radiation is measured and/or recorded in order to analyze the surface structure of the body.

6. Apparatus for non-contact photo-thermic investigation of superficial and internal structures of a solid body (6, 26) for carrying out the method of claims 1-5, consisting of a excitation-beam source (1, 21) and an infrared detector (8, 33) arranged on the side of the body facing away from the excitation beam (2, 22), characterized in that a modulator (3, 23) is arranged between the excitation-beam source (1, 21) and the body (6, 26) to be investigated, that the infrared detector (8, 33) is arranged separated from the body (6, 26), and that a lock-in-amplifier (10, 34) which is controlled by the modulator (3, 23) and which serves to demodulate the measuring signal is arranged behind the infrared detector (8, 33).

7. Apparatus according to claim 6, characterized in that two movable mirrors (27, 28) serving to scan the body (26) in a rectangular coordinate system are provided between the source (21) of the excitation beam (22) and the body (26) and that the infrared detector (33) is connected with a device (34, 35) for displaying the alternating thermal signal as a function of the body coordinates.

8. Apparatus according to claim 7, characterized in that the two mirrors (27, 28) are connected with an arrangement (29, 30) for producing linear deflection signals and additionally with an arrangement (38) for producing position-modulation signals.

9. Apparatus according to claim 7, characterized in that in order to monitor the impingement point of the scanning beam (22) on the surface of the body (26) a beam splitter (25) is provided in the scanning beam (22) which deflects the radiation reflected from the body (26) and that in the way of said deflected radiation a telescope (17) is provided.

10. Apparatus according to claim 7, characterized in that in order to observe the surface structure of the body (26) to be investigated a beam splitter (25) is arranged within the scanning beam path (22) which deflects the radiation reflected from the body (26) and that in the way of said deflected radiation a photo-detector (36) is arranged which is connected with a device (37) for image-producing.

**Revendications**

1. Procédé pour l'examen photo-thermique sans contact de structures proches de la surface et internes d'un corps solide, selon lequel on explore ce corps au moyen d'un faisceau d'excitation électromagnétique concentré et selon lequel on mesure l'effet de la température du corps ainsi induite localement sur le côté du corps opposé au faisceau d'excitation incident sous forme d'un rayonnement infrarouge émis par le corps, caractérisé en ce que l'on module le faisceau d'excitation en on mesure l'onde de chaleur transmise au travers du corps comme un rayonnement infrarouge émis,modulé en synchronisme avec le faisceau d'excitation.

2. Procédé selon la revendication 1, caractérisé en ce que la mesure s'effectue au maximum de la fonction de Planck.

3. Procédé selon les revendications 1 et 2, caractérisé en ce que le faisceau d'excitation est soumis à une modulation locale linéaire ou circulaire.

4. Procédé selon les revendications 1 et 2, caractérisé en ce que l'on utilise l'angle de phase du rayonnement infrarouge modulé comme grandeur de mesure pour l'épaisseur ou la structure du corps.

5. Procédé selon les revendications 1 et 2, caractérisé en ce que l'on mesure et/ou enregistre l'amplitude du rayonnement infrarouge modulé pour examiner la structure superficielle du corps.

6. Dispositif pour l'examen photo-thermique sans contact de structures proches de la surface et internes d'un corps solide (6, 26), pour la mise en oeuvre du procédé selon les revendications 1-5, comprenant une source de faisceau d'excitation (1, 21) et un détecteur à infrarouge (8, 33) disposé sur le côté du corps opposé au faisceau d'excitation (2, 22), caractérisé en ce qu'un modulateur (3, 23) est disposé entre la source (1, 21) du faisceau d'excitation et le corps à examiner (6, 26) et le détecteur à infrarouge (8, 33) est disposé séparé dans l'espace du corps (6, 26) et que le détecteur à infrarouge (8, 33) est suivi d'un amplificateur verrouillé (10, 34) qui est commandé par le modulateur (3, 23) et qui sert à la démodulation du signal de mesure.

7. Dispositif selon la revendication 6, caractérisé en ce que, pour l'exploration du corps (26) dans un système de coordonnées rectangulaires, deux miroirs mobiles (27, 28) sont prévus entre la source (21) du faisceau d'exploration (22) et le corps (26) et que le détecteur à infrarouge (33) est relié à un dispositif (34, 35) pour la représentation du signal thermique alternatif en fonction des coordonnées du corps.

8. Dispositif selon la revendication 7, caractérisé en ce que les deux miroirs (27, 28) sont reliés à un dispositif (28, 30) pour la production de signaux de déviation linéaire et sont en outre reliés à un dispositif (38) pour la production de signaux de modulation locale.

8. Dispositif selon la revendication 7, caractérisé en ce qu'un séparateur de faisceau (25) est disposé dans le faisceau d'exploration (22) pour dévier le rayonnement réfléchi par le corps (26) et qu'une lunette (27) est disposée dans le faisceau dévié pour la surveillance du point d'incidence du faisceau d'exploration (22) sur la surface du corps (26).

10. Dispositif selon la revendication 7, caractérisé en ce que, pour l'observation de la structure superficielle du corps (26) à examiner, un séparateur de faisceau (25) est disposé dans le trajet du faisceau d'exploration (22) pour dévier le rayonnement réfléchi par le corps (26) et un photodétecteur (36) est disposé dans le trajet du faisceau dévié et est relié à un appareil (37) pour la production d'images.

Fig.1

Fig.2

Fig.3

Fig.4

Fig.5